(19) Europäisches Patentamt
European Patent Office
Office européen des brevets

(11) Veröffentlichungsnummer: **0 066 286**
**B1**

(12) **EUROPÄISCHE PATENTSCHRIFT**

(45) Veröffentlichungstag der Patentschrift: **04.09.85**

(51) Int. Cl.⁴: **C 08 L 83/04**

(21) Anmeldenummer: **82104778.4**

(22) Anmeldetag: **01.06.82**

(54) **Zu Elastomeren vernetzbare Massen.**

(30) Priorität: **03.06.81 DE 3121984**

(43) Veröffentlichungstag der Anmeldung: **08.12.82 Patentblatt 82/49**

(45) Bekanntmachung des Hinweises auf die Patenterteilung: **04.09.85 Patentblatt 85/36**

(84) Benannte Vertragsstaaten: **AT BE CH DE FR GB IT LI NL SE**

(56) Entgegenhaltungen:
**DE - A - 2 653 498**
**US - A - 2 938 010**
**US - A - 3 755 261**

(73) Patentinhaber: **WACKER-CHEMIE GMBH, Prinzregentenstrasse 22, D-8000 München 22 (DE)**

(72) Erfinder: **Sommer, Oswin, Dr., Dipl.-Chem., Haydnstrasse 12, D-8263 Burghausen (DE)**
Erfinder: **Dorsch, Norman, Fuchshausen 148 1/3, D-8263 Burghausen (DE)**
Erfinder: **Bosch, Erhard, Dr., Dipl.-Chem., Brucknerstrasse 43, D-8263 Burghausen (DE)**
Erfinder: **Schiller, August, Dr., Dipl.-CHem., Göllstrasse 22, D-8262 Neuötting (DE)**
Erfinder: **Strasser, Alois, Jägerweg 1, D-8263 Burghausen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Unter Ausschluss von Wasser lagerfähige, bei Zutritt von Wasser bei Raumtemperatur zu Elastomeren vernetzende Massen aus kondensationsfähige Endgruppen aufweisendem Diorganopolysiloxan, je Molekül mindestens drei an Silicium gebundene hydrolysierbare Gruppen aufweisender Organosiliciumverbindung und mindestens einem weiteren Stoff, die Elastomere ergeben, welche auf Unterlagen, auf denen sie erzeugt wurden, gut haften, sind bereits bekannt. Hierzu wird z.B. auf US 4 230 826, ausgegeben 28. Oktober 1980, Oswin Sommer und Mitarbeiter, Wacker-Chemie GmbH, verwiesen.

Gegenüber einem derartigem Stand der Technik haben die erfindungsgemässen Massen insbesondere die überraschenden Vorteile, dass die daraus hergestellten Elastomeren auf Kunststoffen, auf denen sie erzeugt wurden, noch besser haften und dass das Ausmass des Haftens der Elastomeren auf den Unterlagen, auf denen sie erzeugt wurden, nicht oder weniger von der Art der hydrolysierbaren Gruppen abhängig ist.

Gegenstand der Erfindung sind unter Ausschluss von Wasser lagerfähige, bei Zutritt von Wasser bei Raumtemperatur zu Elastomeren vernetzende Massen aus kondensationsfähige Endgruppen aufweisendem Diorganopolysiloxan, je Molekül mindestens drei an Silicium gebundene hydrolysierbare Gruppen aufweisender Siliciumverbindung und mindestens einem weiteren Stoff, die dadurch gekennzeichnet sind, dass sie als mindestens einen weiteren Stoff mindestens ein Alkylendiamin enthalten, bei dem mindestens ein an Stickstoff gebundenes Wasserstoffatom durch ein Polyalkylenoxyd ersetzt ist.

US-A-29 38 010 betrifft die Verwendung von primären Aminen, wobei Ethylendiamin und Polyetheramine unter anderen Aminen namentlich, jedoch Polyoxyalkylendiamine nicht genannt sind, zur Vernetzung von feinverteiltes Siliciumdioxid enthaltendem Diorganopolysiloxan. Massen, die mit den erfindungsgemäss verwendeten, substituierten Alkylendiaminen vermischt werden sollen, vernetzen dagegen auch ohne einen solchen Zusatz, wie z.B. schon aus den weiter unten folgenden Vergleichsversuchen ersichtlich. Weiterhin ist, wie in der Beschreibung der vorliegenden Erfindung eingangs dargelegt, Aufgabe dieser Erfindung, das Haften der Elastomeren auf Unterlagen, auf denen sie erzeugt wurden, zu verbessern. US-A-29 38 010 enthält keinen Hinweis darauf und es ist auch aus keiner anderen Druckschrift bekannt geworden, dass die gemäss US-A-29 38 010 erzeugten Elastomeren auf Unterlagen, auf denen sie erzeugt wurden, besser haften als andere Organopolysiloxanelastomere.

DE-26 53 498 ist zu entnehmen, dass Polyoxyalkylenamine, die 1 Stickstoffatom je Molekül enthalten, in Elastomeren aus unter Ausschluss von Wasser lagerfähigen, bei Zutritt von Wasser bei Raumtemperatur zu Elastomeren vernetzenden Massen auf Grundlage von Diorganopolysiloxan durch Erniedrigung des Spannungswerts bei Dehnung die Erhaltung der Verbindung mit der Unterlage, auf denen die Elastomeren erzeugt wurden, bei Beanspruchng dieser Verbindung durch Dehnung ermöglichen. Dass Polyoxyalkylendiamine die Erhaltung der Verbindung mit der Unterlage, auf denen die Elastomeren erzeugt wurden, bei mechanischer Beanspruchung durch Erhöhung der Haftfestigkeit der Elastomeren auf der Unterlage, also durch zumindest praktisch alleiniges Auftreten von Kohäsionsrissen anstelle von Adhäsionsrissen beim gewaltsamen Entfernen der Elastomeren von den Unterlagen, ermöglichen würden, ist DE-A-26 53 498 nicht zu entnehmen.

Somit bedurfte der Gegenstand der Erfindung sowohl gegenüber US-A-29 38 010 als auch gegenüber DE-A-26 53 498 oder gegenüber der Kombination dieser beiden Druckschriften erfinderischer Tätigkeit.

Vorzugsweise ist das Polyalkylenoxyd aus Ethylenoxyd- und Propylenoxydeinheiten aufgebaut.

Wenn das Polyalkylenoxyd aus verschiedenen Alkylenoxydeinheiten aufgebaut ist, so können diese Einheiten in Form von Blöcken vorliegen oder statistisch (random) verteilt sein.

Vorzugsweise betragen die Molekulargewichte der Polyalkylenoxyde 200 bis 10.000 je Mol Alkylendiamin.

Bei dem Alkylendiamin handelt es sich vorzugsweise um Ethylendiamin. Es kann sich dabei aber auch z.B. um 1,2-Diaminpropan, 1,3-Diaminpropan, 1,3-Diaminobutan, 1,5-Diaminopentan oder Hexamethylendiamin handeln.

Alkylendiamine, bei denen mindestens ein an Stickstoff gebundenes Wasserstoffatom durch ein Polyalkylenoxyd ersetzt ist, sind im Handel erhältlich. Sie können z.B. durch Anlagerung von Ethylenoxyd oder Propylenoxyd oder Anlagerung von sowohl Ethylenoxyd als auch Propylenoxyd an ein Alkylendiamin hergestellt werden.

Es können 1, 2, 3 oder 4 an Stickstoff gebundene Wasserstoffatome je Molekül Alkylendiamin durch Polyalkylenoxyd ersetzt sein. Vorzugsweise sind 4 solcher Wasserstoffatome je Molekül Alkylendiamin durch Polyalkylenoxyd ersetzt.

Bevorzugt als Alkylendiamin, bei dem mindestens ein an Stickstoff gebundenes Wasserstoffatom durch Polyalkylenoxyd ersetzt ist, ist ein solches der Formel

$$[(HO(C_3H_6)_y(C_2H_4)_x]_2N\ (CH_2)_2N\ [(C_2H_4)_x(C_3H_6)_yOH]_2,$$

wobei jedes x und jedes y gleiche oder verschiedene ganze Zahlen im Wert von jeweils mindestens 5, bedeutet.

Vorzugsweise enthalten die erfindungsgemässen Massen Alkylendiamin, bei dem mindestens ein an Stickstoff gebundenes Wasserstoffatom

durch Polyalkylenoxyd ersetzt ist, in Mengen von 0,1 bis 5 Gewichtsprozent, bezogen auf das Gesamtgewicht der jeweiligen Masse.

Auch die erfindungsgemässen Massen können aus den gleichen kondensationsfähigen Endgruppen aufweisenden Diorganopolysiloxan hergestellt sein wie die bisher bekannten, unter Ausschluss von Wasser lagerfähigen, bei Zutritt von Wasser bei Raumtemperatur zu Elastomeren vernetzenden Massen aus kondensationsfähige Endgruppen aufweisendem Diorganopolysiloxan und je Molekül mindestens drei an Silicium gebundene hydrolysierbare Gruppen aufweisender Siliciumverbindung sowie gegebenenfalls mindestens einem weiteren Stoff. Die zur Herstellung solcher Massen meist verwendeten und auch im Rahmen der Erfindung bevorzugten, kondensationsfähige Endgruppen aufweisenden Diorganopolysiloxane können z.B. durch die allgemeine Formel

$$HO(SiR_2O)_xSiR_2OH$$

wiedergegeben werden. In dieser Formel bedeutet R gleiche oder verschiedene, einwertige, gegebenenfalls substituierte Kohlenwasserstoffreste und x ist eine ganze Zahl im Wert von mindestens 10.

Innerhalb bzw. entlang der Siloxankette der vorstehend angegebenen Formel können, was bei derartigen Formeln üblicherweise nicht dargestellt wird, zusätzlich zu den Diorganosiloxaneinheiten ($SiR_2O$) noch andere Siloxaneinheiten vorliegen. Beispiele für solche anderen, meist jedoch lediglich als Verunreinigungen vorliegenden Siloxaneinheiten sind solche der Formeln $RSiO_{3/2}$, $R_3SiO_{1/2}$ und $SiO_{4/2}$, wobei R jeweils die oben dafür angegebene Bedeutung hat. Die Menge an solchen anderen Siloxaneinheiten als Diorganosiloxaneinheiten beträgt vorzugsweise höchstens 10 Molprozent, insbesondere höchstens 1 Molprozent, je Mol der kondensationsfähige Endgruppen aufweisenden Diorganopolysiloxane.

Die Hydroxylgruppen in der oben angegebenen Formel können, falls erwünscht, vollständig oder teilweise durch andere kondensationsfähige Gruppen als Si-gebundene Hydroxylgruppen ersetzt sein. Solche anderen kondensationsfähigen Gruppen sind insbesondere Alkoxygruppen mit 1 bis 5 Kohlenstoffatomen und Alkoxyalkylenoxygruppen mit 1 bis 5 Kohlenstoffatomen, wie der Methoxyethylenoxyrest, sowie die hydrolysierbaren Gruppen in den weiter unten näher erläuterten, je Molekül mindestens drei an Silicium gebundene hydrolysierbare Gruppen aufweisenden Siliciumverbindungen. Dabei sei in diesem Zusammenhang darauf hingewiesen, dass wenn die kondensationsfähigen Gruppen im Diorganopolysiloxan mit kondensationsfähigen Gruppen hydrolysierbare Gruppen sind, diese hydrolysierbaren Gruppen nicht die gleichen sein müssen, wie die hydrolysierbaren Gruppen in zur Herstellung der jeweiligen Massen eingesetzter, mindestens drei an Silicium gebundene hydrolysierbare Gruppen aufweisender Siliciumverbindung, die vom Fachmann im allgemeinen als «Vernetzer» bezeichnet wird.

Beispiele für Kohlenwasserstoffreste R sind Alkylreste, wie der Methyl-, Ethyl-, n-Propyl- und Isopropylrest sowie Octadecylreste; Alkenylreste, wie der Vinyl- und Allylrest; cycloaliphatische Kohlenwasserstoffreste, wie der Cyclopentyl- und Cyclohexylrest sowie Methylcyclohexyl- und Cyclohexenylreste; Arylreste, wie der Phenylrest mit Xenylreste; Aralkylreste, wie der Benzyl-, beta-Phenylethyl- und der beta-Phenylpropylrest; sowie Alkarylreste, wie Tolylreste.

Als substituierte Kohlenwasserstoffreste R sind Halogenarylreste, wie Chlorphenyl- und Bromphenylreste; sowie Cyanalkylreste, wie der beta-Cyanethylrest, bevorzugt.

Insbesondere wegen der leichteren Zugänglichkeit sind vorzugsweise mindestens 50%, insbesondere mindestens 90% der Anzahl der SiCgebundenen Reste im kondensationsfähige Endgruppen aufweisenden Diorganopolysiloxan und damit der Reste R in den oben angegebenen Formeln Methylreste.

Es können Gemische aus verschiedenen, kondensationsfähige Endgruppen aufweisenden Diorganopolysiloxanen bei der Herstellung der erfindungsgemässen Massen verwendet werden.

Die Viskosität der kondensationsfähige Endgruppen aufweisenden Diorganopolysiloxane beträgt vorzugsweise 100 bis 500.000 mPa·s bei 25 °C.

Bei der Bereitung der erfindungsgemässen Massen können als je Molekül mindestens drei an Silicium gebundene hydrolysierbare Gruppen aufweisende Siliciumverbindungen beliebige Siliciumverbindungen dieser Art verwendet werden, die auch bisher zur Herstellung von unter Ausschluss von Wasser lagerfähigen, bei Zutritt von Wasser bei Raumtemperatur zu Elastomeren vernetzenden Massen durch Vermischen von mindestens einer derartigen Siliciumverbindung mit kondensationsfähige Endgruppen aufweisendem Diorganopolysiloxan verwendet werden konnten.

Beispiele für im Rahmen der Erfindung verwendbare, je Molekül mindestens drei an Silicium gebundene hydrolysierbare Gruppen aufweisende Siliciumverbindungen sind somit Silane der allgemeinen Formel

$$R_aSiZ_{4-a},$$

worin R die oben dafür angegebene Bedeutung hat, Z eine hydrolysierbare Gruppe und a 0 oder 1 ist, und deren 2 bis 15 Siliciumatome je Molekül aufweisenden Teilhydrolysate.

Beispiele für hydrolysierbare Gruppen Z sind Acyloxygruppen ($-OOCR'$), gegebenenfalls substituierte Kohlenwasserstoffoxygruppen ($OR'$), Kohlenwasserstoffoxykohlenwasseroxygruppen ($-OR''OR'$), wobei R″ ein zweiwertiger Kohlenwasserstoffrest, z.B. der $-(CH_2)_2$-Rest ist, Aminoxygruppen ($-ONR_2'$), Aminogruppen (z.B. $-NR_2'$), Acylaminogruppen (z.B. $-NR'COR'$),

Oximgruppen (z.B. $-ON=CR_2'$) und Phosphatgruppen $[-OOP(OR')_2]$. In diesen Formeln bedeutet R' gleiche oder verschiedene Kohlenwasserstoffreste, die substituiert sein können. Der Fachmann weiss aber auch, dass zumindest bei manchen der vorstehend angegebenen Formeln zumindest ein R' Wasserstoff sein kann. Die Beispiele für Kohlenwasserstoffreste R gelten auch für Kohlenwasserstoffreste R' und die Beispiele für substituierte Kohlenwasserstoffreste R gelten auch für substituierte Kohlenwasserstoffreste R'.

Beispiele für Acyloxygruppen sind insbesondere solche mit 1 bis 18 Kohlenstoffatomen, wie Formyloxy-, Acetoxy-, Propionyloxy-, Valeroyloxy-, 2-Ethylhexoyloxy-, Myristyloxy- und Stearoyloxygruppen, wobei Acetoxygruppen besonders bevorzugt sind.

Beispiele für Kohlenwasserstoffoxygruppen sind insbesondere Alkoxygruppen mit 1 bis 10 Kohlenstoffatomen, wie Methoxy-, Ethoxy-, n-Propoxy-, Isopropoxy- Butoxy-, Hexyloxy-, Heptyloxy- und Octyloxygruppen sowie andere Kohlenwasserstoffoxygruppen mit 2 bis 10 Kohlenstoffatomen, wie Vinyloxy-, Allyloxy-, Ethylallyloxy-, Isopropenyloxy-, Butadienyloxy- und Phenoxygruppen.

Ein Beispiel für eine Kohlenwasserstoffoxykohlenwasserstoffoxygruppe ist die Methyloxyethylenoxygruppe.

Beispiele für Aminoxygruppen sind Dimethylaminoxy-, Diethylaminoxy-, Dibutylaminoxy-, Dioctylaminoxy-, Dicyclohexylaminoxy-, Diphenylaminoxy-, Ethylmethylaminoxy- und Methylphenylaminoxygruppen.

Beispiele für Aminogruppen sind n-Butylamino-, sec.-Butylamino- und Cyclohexylaminogruppen.

Ein Beispiel für eine Acylaminogruppe ist die Benzoylmethylaminogruppe.

Beispiele für Oximgruppen sind Acetaldoxim-, Acetophenonoxim-, Acetonoxim-, Benzophenonoxim-, 2-Butanonoxim-, Diisopropylketoxim- und Chlorcyclohexanonoximgruppen.

Beispiele für Phosphatgruppen sind Dimethylphosphat-, Diethylphosphat-, Di-n-butylphosphat-, Dioctylphosphat-, Methylethylphosphat-, Methylphenylphosphat- und Diphenylphosphatgruppen.

Die je Molekül mindestens drei an Silicium gebundene hydrolysierbare Gruppen aufweisende Siliciumverbindung wird vorzugsweise in Mengen von 0,5 bis 15 Gewichtsprozent, bezogen auf das Gewicht von kondensationsfähige Endgruppen aufweisendem Diorganopolysiloxan, bei der Bereitung der erfindungsgemässen Massen eingesetzt.

Zusätzlich zu kondensationsfähige Endgruppen aufweisendem Diorganopolysiloxan, je Molekül mindestens drei an Silicium gebundene hydrolysierbare Gruppen aufweisender Siliciumverbindung von Alkylendiamin, bei dem mindestens ein an Stickstoff gebundenes Wasserstoffatom durch ein Polyalkylenoxyd ersetzt ist, können bei der Bereitung der erfindungsgemässen Massen auch Stoffe mitverwendet werden, die auch bisher bei der Bereitung von unter Ausschluss von Wasser lagerfähigen, bei Zutritt von Wasser bei Raumtemperatur zu Elastomeren vernetzenden Massen aus kondensationsfähige Endgruppen aufweisendem Diorganopolysiloxan und je Molekül mindestens drei an Silicium gebundene hydrolysierbare Gruppen aufweisender Siliciumverbindung als weitere Stoffe mitverwendet werden konnten. Beispiele für solche zusätzlich mitverwendbaren Stoffe sind anorganische Füllstoffe mit einer Oberfläche von mindestens 20 $m^2/g$, anorganische Füllstoffe mit einer Oberfläche von weniger als 20 $m^2/g$, Pigmente, lösliche Farbstoffe, Duftstoffe, Organopolysiloxanharze, einschliesslich solcher aus $(CH_3)_3SiO_{1/2}$- und $SiO_{4/2}$-Einheiten, rein-organische Harze, wie Polyvinylchloridpulver oder Pulver aus Homo- oder Mischpolymerisaten von Acrylnitril, Ethylen, Vinylacetat oder Styrol, wobei diese rein-organischen Harze auch bereits in Gegenwart vom kondensationsfähige Endgruppen aufweisenden Diorganopolysiloxan erzeugt worden sein können, Korrosionsinhibitoren, Oxydationsinhibitoren, Bakterjcide, Fungicide, Hitzestabilisatoren, Lösungsmittel, weitere Mittel zur Verbesserung der Haftfestigkeit der aus den Massen hergestellten Elastomeren auf Unterlagen, auf denen sie erzeugt wurden, wie gamma-Glycidyloxypropyltriethoxysilan, Kondensationskatalysatoren, wie Zinnsalze oder Organozinnsalze von Carbonsäuren, z.B. Dibutylzinndilaurat, Weichmacher, wie bei Raumtemperatur flüssige, durch Trimethylsiloxygruppen endblockierte Dimethylpolysiloxane oder Phosphorsäureester oder Gemische aus den genannten Weichmachern, Lichtschutzmittel und zellenerzeugende Mittel, wie Azodicarbonamid.

Beispiele für anorganische Füllstoffe mit einer Oberfläche von mindestens 20 $m^2/g$ sind pyrogen erzeugte Siliciumdioxyde, unter Erhaltung der Struktur entwässerte Kieselsäurehydroxyde und Metalloxyde, wie Titandioxyd, Ferrioxyd, Aluminiumoxyd und Zinkoxyd, soweit sie jeweils eine Oberfläche von mindestens 20 $m^2/g$ aufweisen. (Die hier in der Beschreibung angegebenen Werte für Oberflächengrössen von Füllstoffen sind BET-Werte, also Werte, die durch Stickstoffadsorption gemäss ASTM Special Technical Publication, No. 51, 1941, Seite 95 ff., bestimmt wurden).

Beispiele für Füllstoffe mit einer Oberfläche von weniger als 20 $m^2/g$ sind bzw. können sein: Quarzmehl, Diatomeenerde, Neuburger Kreide (englisch: Neuburg Chalk), Calciumsilikat, Zirkoniumsilikat, Calciumcarbonat, z.B. in Form von gemahlener Kreide, calciniertes Aluminiumsilikat und pulverförmiges Natriumaluminiumsilikat mit Molekularsiebeigenschaften.

Auch faserige Füllstoffe, wie Asbeste oder Glasfasern oder Gemische aus den vorstehend genannten Fasern insbesondere solche mit einer durchschnittlichen Länge von höchstens 0,5 mm, oder organische Fasern oder Gemische aus organischen Fasern und anorganischen Fasern können mitverwendet werden.

Zumindest Teilmengen aller oben genannten

Füllstoffe, soweit sie anorganischer Natur sind, können hydrohobiert sein, beispielsweise durch Behandlung mit Dimethyldichlorsilan oder Trimethylethoxysilan oder Stearinsäure oder einem Gemisch aus mindestens zwei solcher Hydrophobierungsmittel. Falls erwünscht, kann eine solche Behandlung z.B. auch in einer Kugelmühle durchgeführt worden sein.

Es können Gemische aus verschiedenen Füllstoffen mit einer Oberfläche von mindestens 20 $m^2/g$ oder Füllstoffen mit einer Oberfläche von weniger als 20 $m^2/g$ oder Gemische aus mindestens einem Füllstoff mit einer Oberfläche von mindestens 20 $m^2/g$ und mindestens einem Füllstoff mit einer Oberfläche von weniger als 20 $m^2/g$ bei der Herstellung der erfindungsgemässen Massen eingesetzt werden.

Zur Bereitung der erfindungsgemässen Massen können alle Bestandteile der jeweiligen Masse in beliebiger Reihenfolge miteinander vermischt werden. Dieses Vermischen erfolgt vorzugsweise bei Raumtemperatur und unter Ausschluss von Wasser. Falls erwünscht, kann dieses Vermischen aber auch bei höheren Temperaturen erfolgen, z.B. bei einer Temperatur im Bereich von 35 bis 150 °C.

Für die Vernetzung der erfindungsgemässen Massen reicht der normale Wassergehalt der Luft aus. Die Vernetzung kann, falls erwünscht, auch bei höheren Temperaturen als Raumtemperatur oder niedrigeren Temperaturen als Raumtemperatur, z.B. bei −5° bis 10 °C durchgeführt werden. Die Vernetzung kann auch mittels den normalen Wassergehalt der Luft übersteigender Konzentrationen von Wasser, z.B. in Wasserdampf, durchgeführt werden.

Die erfindungsgemässen Massen eignen sich ausgezeichnet zum Abdichten von waagrechten, schrägen oder senkrechten Fugen und ähnlichen Leerräumen mit lichten Weiten von z.B. 10 mm bis 50 mm, beispielsweise von Gebäuden, Land-, Luft- oder Wasserfahrzeugen, als Klebstoffe, insbesondere für rein organische Kunststoffe, wie Polyvinylchlorid, Polyamide oder Epoxyharze, weiterhin z.B. für Holz, zum Beschichten verschiedenster Unterlagen, einschliesslich gewebten und ungewebten Textilien, zur Herstellung von Formkörpern, einschliesslich elektrischer Isolierungen, und zum Verkitten von Fenstern.

In den folgenden Beispielen beziehen sich alle Angaben von Teilen auf das Gewicht, soweit nichts anderes angegeben ist.

Beispiel 1

Bei Raumtemperatur und 10 mbar (abs.) werden in einem Planetenmischer 65 Teile eines in den endständigen Einheiten je eine Si-gebundene Hydroxylgruppe aufweisenden Dimethylpolysiloxans mit einer Viskosität von 80.000 mPa·s bei 25 °C mit 23 Teilen eines durch Trimethylsiloxygruppen endblockierten Dimethylpolysiloxans mit einer Viskosität von 100 mPa·s bei 25 °C, 6 Teilen Methyltriacetoxysilan, 8 Teilen pyrogen erzeugten Siliciumdioxyds und 1 Teil Ethylendiamin, bei dem mindestens ein an Stickstoff gebundenes Wasserstoffatom durch ein Polyalkylenoxyd ersetzt ist und das durch Anlagerung von 20 Mol Ethylenoxyd und 20 Mol Propylenoxyd je Mol Ethylendiamin an Ethylendiamin hergestellt wurde, vermischt. Die so erhaltene Masse ist standtfest (englisch: has non-slump properties), was bedeutet, dass sie vor der Vernetzung zum Elastomeren aus senkrechten oder gegenüber der Waagrechten geneigten fugen nicht ausläuft, unter Ausschluss von Wasser lagerfähig und härter unter der Einwirkung des Wasserdampfs der Luft zu einem Elastomeren.

Vergleichsversuch a)

Die in Beispiel 1 beschriebene Arbeitsweise wird wiederholt mit der Abänderung, dass weder substituiertes noch unsubstituiertes Ethylendiamin mitverwendet wird.

Beispiel 2

Bei Raumtemperatur und 10 mbar (abs.) werden in einem Planetenmischer 58 Teile des in den endständigen Einheiten je eine Si-gebundene Hydroxylgruppe aufweisenden Dimethylpolysiloxans mit einer Viskosität von 80.000 mPa·s bei 25 °C mit 27 Teilen des durch Trimethylsiloxygruppen endblockierten Dimethylpolysiloxans mit einer Viskosität von 100 mPa·s bei 25 °C, 9,5 Teilen pyrogen erzeugten Siliciumdioxyds, 4,5 Teilen Methyltris-(cyclohexylamino)-silan und 1 Teil Ethylendiamin, bei dem mindestens ein an Stickstoff gebundenes Wasserstoffatom durch ein Polyalkylenoxyd ersetzt ist und das durch Anlagerung von 20 Mol Ethylenoxyd und 20 Mol Propylenoxyd je Mol Ethylendiamin an Ethylendiamin hergestellt wurde, vermischt. Die so erhaltene Masse ist standfest, unter Ausschluss von Wasser lagerfähig und härtet unter der Einwirkung des Wasserdampfs der Luft zu einem Elastomeren.

Vergleichsversuch b)

Die in Beispiel 2 beschriebene Arbeitsweise wird wiederholt mit der Abänderung, dass weder substituiertes noch unsubstituiertes Ethylendiamin mitverwendet wird.

Beispiel 3

Die in Beispiel 2 beschriebene Arbeitsweise wird wiederholt mit der Abänderung, dass anstelle der 4,5 Teile Methyltris-(cyclohexylamino)-silan 4,5 Teile Methyltris-(2-butanonoxim)-silan eingesetzt werden. Die so erhaltene Masse ist standfest, unter Ausschluss von Wasser lagerfähig und härtet unter der Einwirkung des Wasserdampfs der Luft zu einem Elastomeren.

Vergleichsversuch c)

Die in Beispiel 3 beschriebene Arbeitsweise wird wiederholt mit der Abänderung, dass weder substituiertes noch unsubstituiertes Ethylendiamin mitverwendet wird.

Stränge von Massen, die gemäss den Beispielen und Vergleichsversuchen hergestellt wurden, werden auf Platten aus den in der folgenden Tabelle angegebenen Stoffen aufgetragen und zum Elastomeren an der Luft härten gelassen. Die so behandelten Platten werden 3 Wochen bei Raumtemperatur unter Wasser gelagert. In der folgenden Tabelle sind die Ergebnisse angegeben, die beim gewaltsamen Entfernen der Elastomerstränge von den Unterlagen erhalten werden. Dabei bedeuten:

A = Adhäsionsriss = Trennung zwischen Elastomer-Strang und Platte
K = Kohäsionsriss = Riss im Elastomer-Strang
AK = Adhäsions- und Kohäsionsriss

Tabelle

| Platte aus | Elastomer-Strang aus Masse gemäss | | | | | |
|---|---|---|---|---|---|---|
| | Beispiel 1 | Vgl.-versuch a) | Beispiel 2 | Vgl.-versuch b) | Beispiel 3 | Vgl.-versuch c) |
| Polyvinylchlorid | K | A | K | A | K | A |
| Polymethacrylat | K | A | K | A | K | AK |
| Epoxyharz | K | AK | K | A | K | AK |
| Melaminharz | K | A | K | A | K | A |
| Polyurethan | K | A | K | A | K | A |
| Sipo*-Holz** | K | A | K | A | K | A |
| Sipo*-Holz*** | K | A | K | A | K | AK |
| Polyamid | K | A | K | A | K | K |

*zu den roten Hölzern zählendes hartes, dauerhaftes, rotbraunes, bläulich-violett getöntes Holz von Entrandrophragma utile.
**mit handelsüblichem weissem Alkylharzlack überzogen
***mit handelsüblichem (Registriertes Warenzeichen: «Xyladecor») Holzschutzmittel, das gleichzeitig als farblose Lasur dient, überzogen.

## Patentansprüche

1. Unter Ausschluss von Wasser lagerfähige, bei Zutritt von Wasser bei Raumtemperatur zu Elastomeren vernetzende Massen aus kondensationsfähige Endgruppen aufweisendem Diorganopolysiloxan, je Molekül mindestens drei an Silicium gebundene hydrolysierbare Gruppe aufweisender Siliciumverbindung und mindestens einem weiteren Stoff, dadurch gekennzeichnet, dass sie als mindestens einen weiteren Stoff mindestens ein Alkylendiamin enthalten, bei dem mindestens ein an Stickstoff gebundenes Wasserstoffatom durch ein Polyalkylenoxyd ersetzt ist.

2. Massen nach Anspruch 1, dadurch gekennzeichnet, dass das Polyalkylenoxyd aus Ethylenoxyd und Propylenoxydeinheiten aufgebaut ist.

3. Massen nach Anspruch 1 oder 2, dadurch gekennzeichnet, dass das Alkylendiamin Ethylendiamin ist.

4. Massen nach mindestens einem der Ansprüche 1 bis 3, dadurch gekennzeichnet, dass sie ein Alkylendiamin, bei dem mindestens ein an Stickstoff gebundenes Wasserstoffatom durch Polyalkylenoxyd ersetzt ist, in Mengen von 0,1 bis 5 Gewichtsprozent, bezogen auf das Gesamtgewicht der jeweiligen Masse, enthalten.

## Revendications

1. Matières stables au stockage en l'absence d'eau, pouvant se réticuler en élastomères par addition d'eau à la température ambiante, constituées de diorganopolysiloxane possédant des groupes terminaux condensables, un composé du silicium présentant par molécule au moins un groupe hydrolysalble fixé au silicium, et au moins une autre substance, caractérisées en ce qu'elles contiennent en tant qu'autre substance au moins une alkylènediamine dans laquelle au moins un atome d'hydrogène fixé à l'azote est remplacé par un poly(oxyde d'alkylène).

2. Matières selon la revendication 1, caractérisées en ce que le poly(oxyde d'alkylène) est constitué de motifs oxyde d'éthylène et oxyde de propylène.

3. Matières selon la revendication 1 ou 2, caractérisées en ce que l'alkyelñediamine est l'éthylènediamine.

4. Matières selon au moins l'une des revendications 1 à 3, caractérisées en ce qu'elles contiennent une alkylènediamine dans laquelle au moins un atome d'hydrogène fixé à l'azote est remplacé par un poly(oxyde d'alkylène), en des concentrations de 0,1 à 5% en poids sur la base du poids total de la matière considérée.

## Claims

1. Compositions that can be stored in the absence of water and cross-link at room temperature in the presence of water to form elastomers, comprising a diorganopolysiloxane having condensable terminal groups, a silicon compound containing per molecule at least three silicon-bonded hydrolysable groups, and at least one further substance, characterised in that as the at least one further substance they contain at least one alkylene diamine in which at least one hydrogen atom bonded to nitrogen has been replaced by a polyalkylene oxide.

2. Compositions according to claim 1, characterised in that the polyalkylene oxide comprises ethylene oxide and propylene oxide units.

3. Compositions according to claim 1 or 2, characterised in that the alkylene diamine is ethylene diamine.

4. Compositions according to at least one of claims 1 to 3, characterised in that they contain an alkylene diamine in which at least one hydrogen atom bonded to nitrogen has been replaced by polyalkylene oxide, in amounts of from 0.1 to 5% by weight calculated on the total weight of the particular composition.